# DEMANDE DE BREVET EUROPEEN

(11) **EP 0 876 020 A1**
(43) Date de publication de la demande: **04.11.1998**
(21) Numéro de dépôt: 98400989.4
(22) Date de dépôt: 23.04.1998
(51) Int. Cl.: H04J 14/08

(54) **Procédé et dispositif de décompression d'impulsions constituant un signal optique binaire**

(30) Priorité: 28.04.1997 FR 9705207
(71) Demandeur: ALCATEL ALSTHOM COMPAGNIE GENERALE D'ELECTRICITE, 75008 Paris (FR)
(72) Inventeur: Chiaroni, Dominique, 92160 Antony (FR); Chauzat, Corinne, 94000 Creteil (FR); Sotom, Michel, 75015 Paris (FR); de Bouard, Dominique, 91700 Ste-Genevieve-Des-Bois (FR)
(74) Mandataire: Fournier, Michel Robert Marie

(57) **Abrégé**

Dans les systèmes de communication à réseaux optiques, les débits du domaine électrique peuvent être adaptés à ceux du domaine optique grâce au multiplexage temporel, avec compression des impulsions formant les données optiques transmises.

L'invention concerne un procédé qui réalise de façon entièrement optique la décompression des impulsions à effectuer à la réception. Le procédé consiste :
- à former q signaux auxiliaires (Se-Sh) obtenus en modulant par le signal reçu (S'1) q ondes porteuses optiques de longueurs d'onde différentes (λe-λh), et
- à combiner q signaux auxiliaires retardés (Re-Rh) obtenus en appliquant aux signaux auxiliaires (Se-Sh) des retards tels que deux signaux auxiliaires retardés (Re-Rh) consécutifs quelconques soient décalés temporellement de la durée Δ des impulsions formant le signal reçu (S'1).

## Description

L'invention se situe dans le domaine des systèmes de communication utilisant des réseaux optiques.

Généralement, les informations véhiculées dans ces systèmes sont des données binaires ayant la forme d'impulsions rythmées à une fréquence d'horloge déterminée. Les niveaux d'amplitude de ces impulsions sont représentatifs de ces données binaires. Initialement, ces impulsions sont sous forme électrique, puis elles sont converties en un signal optique obtenu par une modulation de puissance (ou d'amplitude) d'une onde porteuse optique.

L'intérêt des systèmes optiques est que les fibres optiques qui constituent les liaisons de transmission permettent des débits beaucoup plus élevés que les lignes électriques.

De façon analogue, il existe une différence du même ordre entre les capacités de débit des systèmes du domaine optique et celles des circuits du domaine électrique. Un problème qui se pose est donc de concevoir des interfaces de conversion électrique-optique à l'émission et optique-électrique à la réception permettant d'adapter ces débits.

Une solution consiste à prévoir un multiplexage temporel selon lequel plusieurs signaux électriques à transmettre sont prélevés de manière synchrone en parallèle puis transmis en série dans le réseau, sous forme de multiplex temporel optique. A la réception, les signaux optiques constituant le multiplex sont extraits par une conversion série-parallèle. En outre, de façon à exploiter au mieux la bande passante du réseau optique, les impulsions formant les données transmises seront avantageusement compressées.

Il faut toutefois que les interfaces de conversion soient adaptées au possibilités de l'électronique. Par ailleurs, ces opérations de compression, décompression et de conversion parallèle-série et série-parallèle devraient être peu coûteuses à réaliser.

L'invention vise à résoudre le problème particulier de la décompression et propose pour cela un procédé qui réalise cette décompression de façon entièrement optique.

Dans ce but, l'invention a pour objet un procédé de décompression d'impulsions constituant un signal optique binaire reçu, lesdites impulsions étant contenues dans des intervalles de temps bit successifs de durée T et ayant une durée Δ au plus égal à T/q, q étant un nombre entier au moins égal à 2, caractérisé en ce qu'il consiste notamment :
- à former q signaux auxiliaires obtenus respectivement en modulant en fonction de l'amplitude dudit signal reçu les amplitudes de q ondes porteuses optiques de longueurs d'onde différentes, et
- à former un signal décompressé constitué d'une combinaison de q signaux auxiliaires retardés obtenus en appliquant auxdits signaux auxiliaires des retards tels que deux signaux auxiliaires retardés consécutifs quelconques soient décalés temporellement de sensiblement ladite durée Δ.

Ainsi, l'invention exploite la dimension spectrale du domaine optique de façon à éviter la création de bruit interférométrique.

Selon une première possibilité, on combine lesdits signaux auxiliaires avant de leur appliquer lesdits retards, en exploitant les différences de leurs longueurs d'onde.

Selon une autre possibilité, on applique ces retards aux signaux auxiliaires avant de les combiner.

Bien que ces deux possibilités soient en principe fonctionnellement équivalentes, nous verrons ultérieurement que la première possibilité permet une mise en oeuvre plus économique.

L'invention a également pour objet un dispositif de mise en oeuvre du procédé défini ci-dessus. Le dispositif est caractérisé en ce qu'il comporte :
- des premiers moyens pour moduler en fonction de l'amplitude dudit signal reçu les amplitudes de q ondes porteuses optiques de longueurs d'onde différentes, et
- des seconds moyens pour former un signal décompressé constitué d'une combinaison de q signaux auxiliaires retardés obtenus en appliquant auxdits signaux auxiliaires des retards tels que deux signaux auxiliaires retardés consécutifs quelconques soient décalés temporellement de sensiblement ladite durée Δ.

Enfin, l'invention a aussi pour objet un système de communication comportant un réseau optique, au moins un terminal d'émission muni d'un dispositif de multiplexage temporel et au moins un terminal de réception muni d'un dispositif de démultiplexage temporel, caractérisé en ce que ledit dispositif de démultiplexage temporel comprend un dispositif de décompression tel que défini précédemment.

D'autres aspects et avantages de l'invention apparaîtront dans la suite de la description en référence aux figures.
- La figure 1 représente schématiquement un système de communication optique conforme à l'invention.
- La figure 2 représente un exemple de réalisation de dispositif de multiplexage temporel.
- La figure 3 représente des chronogrammes permettant d'expliquer le fonctionnement du dispositif de la figure 2.
- La figure 4 représente un dispositif de synchronisation et de mise en forme.
- La figure 5 représente des chronogrammes servant à expliquer le fonctionnement du dispositif de la figure 4.
- La figure 6 représente un dispositif de conversion série-parallèle du multiplex temporel reçu par un terminal de réception du système de communication.
- La figure 7 représente des chronogrammes servant à expliquer le fonctionnement du dispositif de la figure 6.
- La figure 8 représente un dispositif selon l'invention de décompression d'un des signaux extraits du multiplex temporel reçu par le terminal de réception.
- La figure 9 représente des chronogrammes permettant d'expliquer le fonctionnement du dispositif de la figure 8.
- Les figures 10 et 11 représentent des variantes de réalisation du dispositif de décompression selon l'invention.

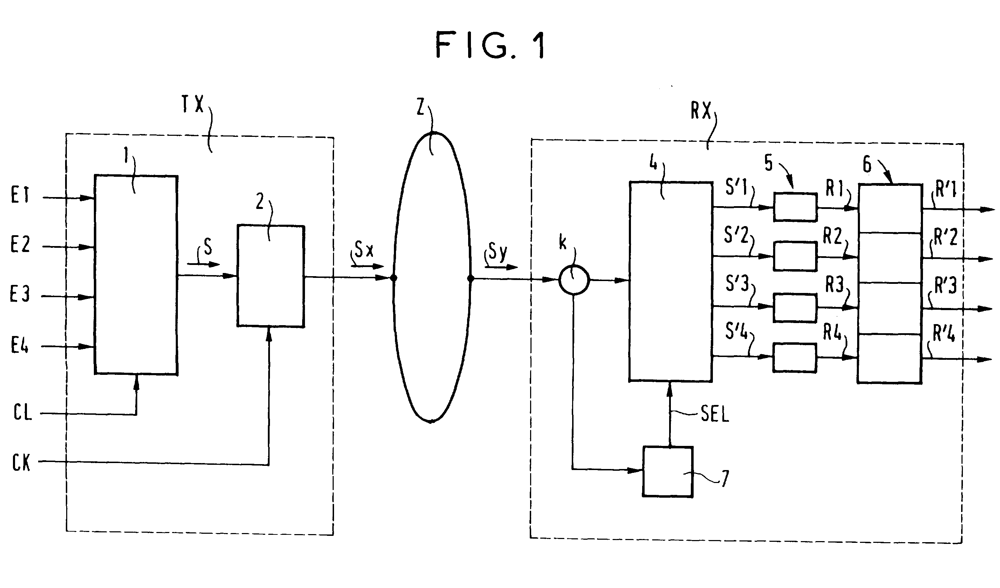

La figure 1 représente schématiquement un système de communication à réseau optique. Le système est constitué d'un ou de plusieurs terminaux d'émission TX reliés à un ou plusieurs terminaux de réception RX par l'intermédiaire d'un réseau optique Z.

Dans le cas général, le terminal d'émission TX reçoit n signaux d'entrée sous forme électrique ou optique. A titre d'exemple, on a pris ici n = 4.

Les signaux d'entrée E1-E4 sont des signaux synchrones qui représentent des données binaires contenues dans des intervalles de temps bit successifs de durée T. Ils sont reçus par un dispositif de multiplexage temporel 1 qui est commandé par un signal d'horloge de compression CL. Le dispositif 1 fournit un signal multiplex S à un dispositif de synchronisation et de mise en forme 2 qui est commandé par un signal d'horloge d'échantillonnage CK.

Par l'intermédiaire d'une interface appropriée non représentée, le dispositif 2 fournit au réseau Z le signal de sortie Sx.

Le signal Sx transmis par le réseau Z devient un signal d'entrée Sy pour le terminal de réception RX. Un coupleur k reçoit ce signal d'entrée Sy et en fournit une partie à un dispositif de commande de sélection 7 ainsi qu'à un dispositif de démultiplexage temporel constitué d'un étage de conversion série-parallèle 4 suivi d'étages de décompression 5. Le dispositif 4 fournit des signaux démultiplexés compressés S'1-S'4 correspondant respectivement aux signaux d'entrée E1-E4 du terminal d'émission TX. Les signaux démultiplexés compressés S'1-S'4 sont appliqués respectivement aux dispositifs de décompression 5 selon l'invention qui fournissent des signaux décompressés correspondants R1-R4. Les signaux R1-R4 peuvent ensuite être convertis en signaux électriques R'1-R'4 par des convertisseurs 6.

La constitution et le fonctionnement des divers éléments du système de communication vont maintenant être décrits plus en détail.

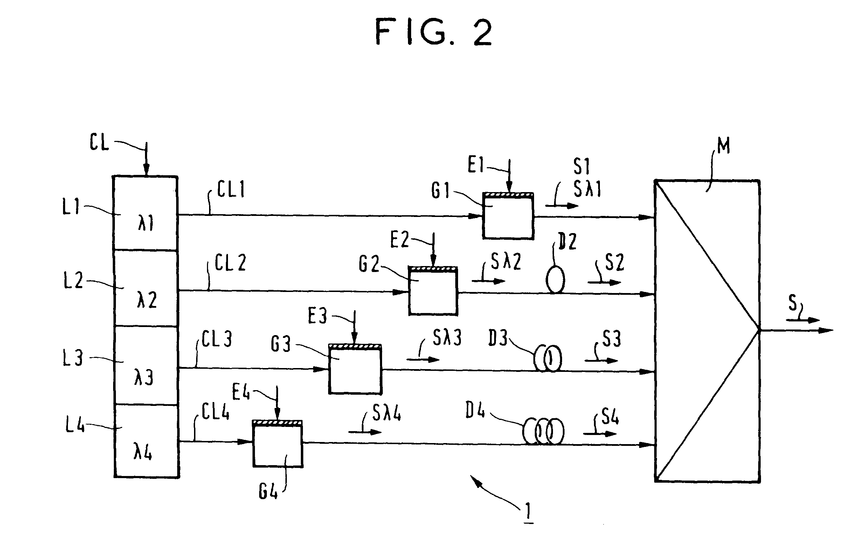

La figure 2 représente un exemple de réalisation du dispositif de multiplexage temporel, dans le cas particulier où les signaux d'entrée E1-E4 sont des signaux électriques au nombre de quatre.

Le dispositif comporte quatre sources optiques L1-L4 aptes à générer des ondes porteuses de longueurs d'onde différentes λ1-λ4. Ces sources sont modulables par le signal d'horloge de compression CL et fournissent respectivement des signaux optiques de compression CL1-CL4.

En pratique, les sources L1-L4 comportent des oscillateurs laser qui génèrent respectivement ces ondes porteuses. Dans le cas où le signal CL est électrique, les sources L1-L4 peuvent être constituées d'oscillateurs laser dont l'alimentation en courant est commandée en fonction du signal CL. Il peut s'agir aussi de lasers à modulateur intégré. Si le signal CL est un signal optique, les sources L1-L4 peuvent être constituées de lasers à mode bloqué.

Les signaux optiques de compression CL1-CL4 portés respectivement par les longueurs d'onde λ1-λ4 sont reçus respectivement par des portes optiques G1-G4 commandées respectivement par les signaux électriques d'entrée E1-E4. Les portes G1-G4 délivrent des signaux d'entrée compressés Sλ1-Sλ4. Une première entrée d'un multiplexeur M reçoit directement Sλ1 tandis que ses autres entrées reçoivent Sλ2, Sλ3, Sλ4 par l'intermédiaire de lignes à retard D2, D3, D4. Les lignes à retard D2-D4 sont dimensionnées pour créer des retards respectivement de T/4, T/2, 3T/4. Ainsi, le multiplexeur M reçoit des signaux retardés S1-S4 tels que deux signaux retardés consécutifs quelconques soient décalés temporellement de sensiblement T/4. Dans le cas général où on aurait n signaux d'entrée, les retards seraient T/n, 2T/n, 3T/n...(n-1)T/n. On aurait donc des signaux retardés S1-Sn tels que deux signaux retardés consécutifs quelconques soient décalés temporellement de sensiblement T/n.

Le multiplexeur M effectue la combinaison des signaux retardés S1-S4 pour fournir en sortie le signal multiplex temporel S.

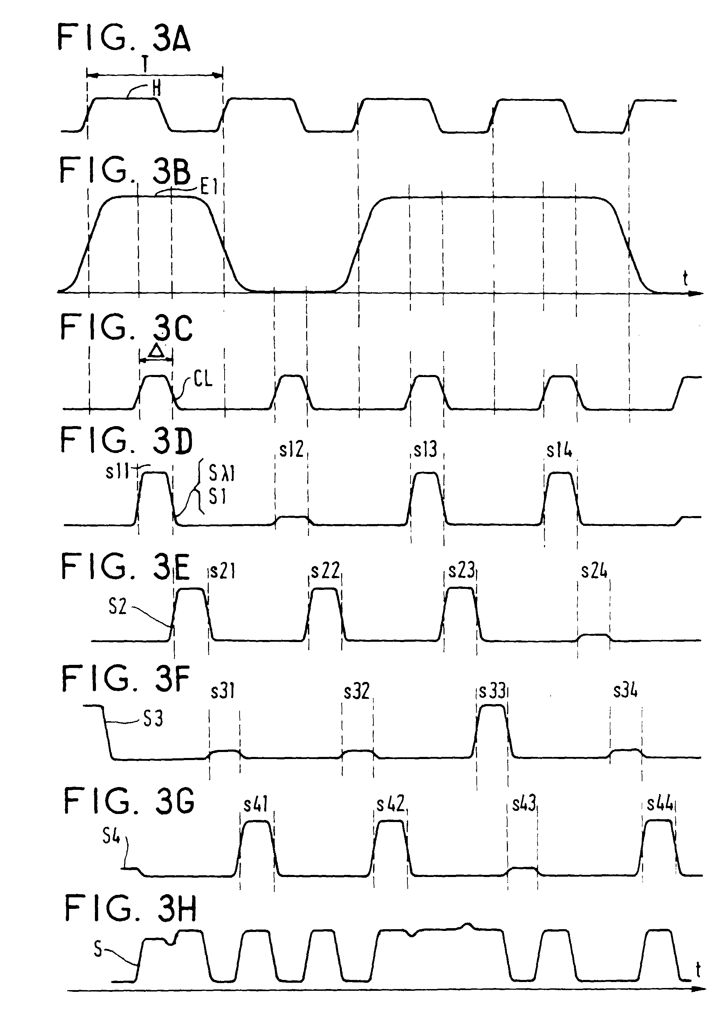

Le fonctionnement du dispositif de la figure 2 va maintenant être décrit à l'aide des chronogrammes a) à h) de la figure 3.

Le chronogramme b) représente un exemple de variations en fonction du temps de l'amplitude d'un des signaux d'entrée E1 supposé ici de type NRZ. Cette amplitude est modulée entre des niveaux hauts et des niveaux bas qui représentent des données binaires contenues dans des intervalles de temps bit successifs dont la durée T est imposée par un signal d'horloge H représenté sur le chronogramme a). Selon cet exemple, le signal E1 représente successivement les données binaires 1,0,1,1.

Le signal d'horloge de compression CL représenté sur le chronogramme c) est constitué d'impulsions de fréquence 1/T et de largeur égale à une durée déterminée Δ. Dans le cas général où n signaux d'entrée sont à multiplexer, la durée Δ doit être au plus égale à T/n. Dans le cas particulier où le signal multiplex S à fournir est de type NRZ, la durée Δ sera choisie sensiblement égale à T/n. Dans l'exemple représenté où n = 4, on aura dans ce cas Δ = T/4. Le signal CL est calé par rapport aux signaux d'entrée E1-E4 de sorte que les impulsions qui le constituent apparaissent au voisinage du milieu des intervalles de temps bit T.

Les sources L1-L4 modulées par le signal CL fournissent les signaux optiques de compression CL1-CL4 portés respectivement par les longueurs d'ondes λ1-λ4 et dont les amplitudes reproduisent celle du signal CL.

Chaque signal optique de compression, par exemple CL1, est ensuite modulé par la porte optique correspondante G1 en fonction de l'amplitude du signal d'entrée E1 qui la commande. La porte G1 fournit alors le signal d'entrée compressé Sλ1 tel que représenté sur le chronogramme d). De façon analogue, les portes G2 à G4 fournissent des signaux d'entrée compressés correspondant Sλ2 à Sλ4 non représentés sur la figure 3. Après avoir traversé les lignes à retard D2-D4, ces signaux deviennent des signaux retardés S1-S4.

Des exemples de signaux retardés S1-S4 sont représentés sur les chronogrammes d) à g). Selon cet exemple, le signal S1 représente les données binaires successives s11, s12, s13, s14, le signal S2 représente les données binaires s21, s22, s23, s24, le signal S3 représente des données binaires s31, s32, s33, s34 et le signal S4 représente les données binaires s41, s42, s43, s44.

Le signal multiplex S qui résulte de leur combinaison est représenté sur le chronogramme h).

Dans cet l'exemple, on avait choisi Δ = T/4, ce qui a entraîné que le signal S est constitué d'impulsions jointives d'amplitudes modulées en fonction des signaux d'entrée E1-E4. Pour des valeurs de Δ inférieures, on obtiendrait des impulsions non jointives. Par exemple, en choisissant Δ = T/2n, on réaliserait en même temps une conversion NRZ-RZ.

On peut noter que l'exemple de réalisation de la figure 2 permet par des moyens simples de réaliser à la fois la compression des impulsions, une conversion parallèle-série et la conversion électro-optique.

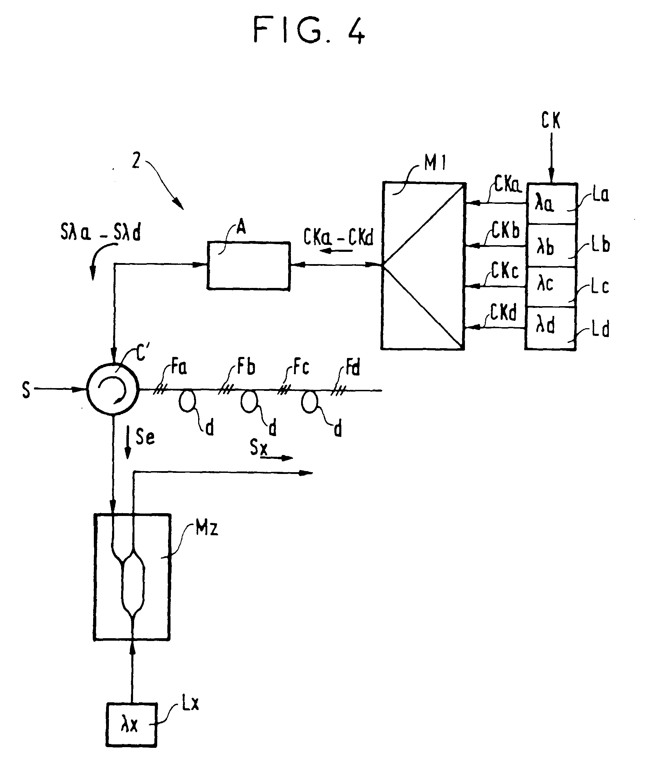

La figure 4 représente un exemple de réalisation du dispositif de resynchronisation et de mise en forme 2.

Il comporte un premier étage recevant comme signal d'entrée le signal multiplex S et fournissant un signal resynchronisé Se. Cet étage comporte un circulateur C' à quatre ports. Un premier port reçoit le signal S, un second port est relié à un amplificateur optique semi-conducteur A, un troisième port est relié à un dispositif à retard constitué des filtres Fa, Fb, Fc, Fd montés en cascade par l'intermédiaire de lignes à retard d, et un quatrième port fournissant le signal resynchronisé Se.

L'amplificateur A comporte un premier port relié au second port du circulateur C' et un second port opposé au premier relié à la sortie d'un multiplexeur M1. L'amplificateur A est typiquement un amplificateur optique semi-conducteur.

Le multiplexeur M1 reçoit des signaux optiques d'échantillonnage CKa, CKb, CKc, CKd fournis respectivement par quatre sources optiques La, Lb, Lc, Ld aptes à générer des ondes porteuses de longueurs d'onde différentes λa-λd et modulées par un signal d'horloge d'échantillonnage CK.

Dans le cas général, le multiplexeur M1 peut recevoir en entrée p signaux optiques d'échantillonnage, mais à titre d'exemple, on a pris ici p = 4 .

Dans le cas général, l'intervalle de temps bit du signal d'entrée S étant T0 = T/n, le signal d'horloge d'échantillonnage CK est constitué d'impulsions de durée déterminée δ au plus égale à T0/p, à la fréquence de 1/T0. Dans le cas particulier où le signal resynchronisé Se à fournir est de type NRZ, cette durée δ sera sensiblement égale à T0/p.

Les filtres Fa, Fb, Fc, Fd sont des filtres réjecteurs accordés respectivement pour réfléchir les longueurs d'onde λa-λd. Pour tenir compte des trajets aller et retour des ondes, les lignes à retard d sont dimensionnées chacune pour créer un retard sensiblement égal à la moitié de la durée δ.

Le signal resynchronisé Se est appliqué à l'entrée d'un second étage constitué d'un convertisseur de longueur d'onde à structure interférométrique MZ associée à un oscillateur laser Lx. La structure interférométrique MZ est par exemple du type Mach-Zehnder. Elle comporte alors deux branches véhiculant deux ondes cohérentes issues de l'oscillateur Lx et couplées pour fournir le signal de sortie Sx. L'une des branches reçoit en outre le signal d'entrée Se. Cette branche comporte un milieu dont l'indice varie en fonction de la puissance optique totale qu'elle véhicule. Ainsi, les variations de puissance du signal d'entrée modulent l'indice et les deux ondes cohérentes peuvent interférer de façon destructive ou constructive en fonction du niveau de puissance du signal d'entrée. Une description détaillée de ce type de convertisseur est par exemple donnée dans l'article "Wagelength Conversion by Optimized Monolithic Integrated Mach-Zehnder Interferometer", C. Joergensen et al, IEEE PHOTONICS TECHNOLOGY LETTERS, VOL. 8, n° 4, avril 1996.

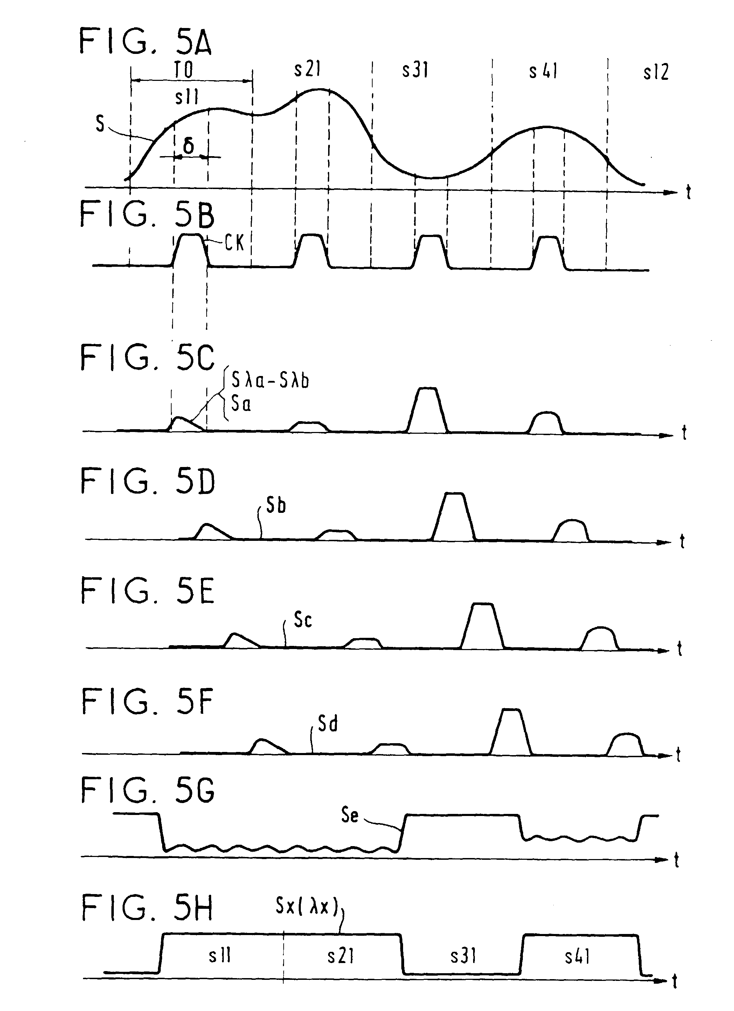

Le fonctionnement du dispositif de la figure 4 va maintenant être décrit à l'aide des chronogrammes a) à h) de la figure 5.

Le chronogramme a) représente les variations en fonction du temps de l'amplitude du signal multiplex S de l'exemple précédent. Cette amplitude est modulée entre des niveaux hauts et des niveaux bas qui représentent des données binaires s11, s21, s31, s41, s12 contenues dans des intervalles de temps bit successifs de durée T0. Selon cet exemple, le signal représente successivement les données binaires 1,1,0,1,0.

Le chronogramme b) représente le signal d'horloge d'échantillonnage CK. Il est constitué d'une succession d'impulsions de durée δ et de fréquence 1/T0. Dans l'exemple représenté le signal resynchronisé Se est de type NRZ, avec p = 4 et on a δ = T0/4. Le signal CK est calé par rapport au signal d'entrée S de sorte que les impulsions qui le constituent apparaissent au voisinage du milieu des intervalles de temps bit T0.

Les sources La-Ld modulées par le signal CK fournissent des signaux optiques d'échantillonnage CKa-CKd (non représentés) portés respectivement par les longueurs d'onde λa-λd et dont l'amplitude reproduit celle du signal CK.

Les signaux d'échantillonnage CKa-CKd sont combinés par le multiplexeur M1 puis injectés dans l'amplificateur A par son second port. Par son premier port, l'amplificateur A reçoit le signal optique d'entrée S issu du second port du circulateur C'. Le signal S est ainsi injecté en sens opposé. Comme le milieu amplificateur est saturable, le gain appliqué aux signaux CKa-CKd est modulé par l'amplitude du multiplex S. Le premier port de l'amplificateur A fournit alors au second port du circulateur C' des signaux échantillonnés Sλa-Sλd portés respectivement par les longueurs d'onde λa-λd, comme représentés sur le chronogramme c).

Ces signaux échantillonnés Sλa-Sλd sont appliqués au dispositif à retard formé des filtres Fa-Fd et des lignes à retard d par l'intermédiaire du troisième port du circulateur C'. Les filtres Fa-Fd étant des filtres réjecteurs calés respectivement sur les longueurs d'onde λa-λd et les lignes à retard d étant dimensionnées chacune pour créer un retard égal à T0/2p = T0/8, le dispositif à retard réfléchit les signaux retardés Sa-Sd portés respectivement par les longueurs d'onde λa-λd de sorte que deux signaux retardés consécutifs quelconques soient décalés temporellement de sensiblement T0/p = T0/4, comme représentés respectivement sur les chronogrammes c) à f). Le quatrième port du circulateur C' délivre alors le signal resynchronisé Se qui est la combinaison des signaux Sa-Sd comme représenté sur le chronogramme g).

On constate que les niveaux bas du signal d'entrée S se traduisent par des niveaux hauts correspondants du signal resynchronisé Se et réciproquement. Grâce à l'amplificateur semi-conducteur A, les niveaux hauts du signal Se sont bien égalisés. Par contre, les niveaux bas du signal Se présentent encore des niveaux de puissances non nuls, ce qui traduit un taux d'extinction perfectible.

Ce défaut est facilement corrigé grâce au convertisseur de longueur d'onde à structure interférométrique MZ du second étage. Ce dernier fournit alors le signal de sortie Sx, porté par la longueur d'onde λx et complètement remis en forme, comme représenté sur le chronogramme h).

On peut noter que l'égalisation des niveaux hauts du signal Se resynchronisé par le premier étage a pour effet de stabiliser le fonctionnement du convertisseur à structure interférométrique.

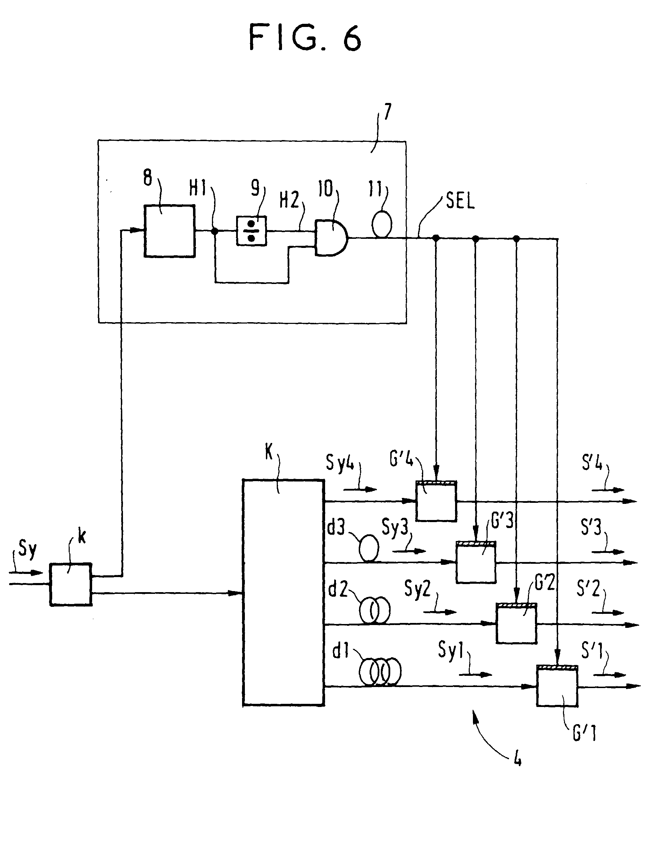

La figure 6 représente un exemple de réalisation de l'étage de conversion série-parallèle 4 du dispositif de démultiplexage temporel d'un terminal de réception RX. L'étage comporte en entrée un coupleur k recevant le signal d'entrée Sy et fournissant une partie de ce signal à un autre coupleur K et une autre partie à un dispositif de commande de sélection 7.

Le dispositif 7 est conçu pour fournir un signal de sélection SEL constitué d'impulsions de durée T0 = T/n, de fréquence 1/nT0 = 1/T et synchronisé par rapport au signal d'entrée Sy de sorte que chaque impulsion couvre un intervalle de temps bit de ce signal.

Pour cela, le dispositif 7 comporte un dispositif classique de récupération de signal d'horloge 8 fournissant à partir du signal optique Sy un signal électrique d'horloge H1 ayant une fréquence moitié de celle de l'horloge de base H0 du signal Sy. A partir du signal H1, un circuit logique approprié fournira le signal de sélection SEL défini ci-dessus.

Ainsi, dans le cas où n = 4, le signal H1 sera appliqué à l'entrée d'un diviseur de fréquence par deux 9 fournissant le signal H2, ainsi qu'à l'entrée d'une porte ET 10 dont une seconde entrée reçoit le signal H2. La porte 10 fournit le signal de sélection SEL par l'intermédiaire d'un dispositif à retard 11, par exemple ajustable, permettant de bien caler le signal SEL par rapport aux signaux qu'il commande.

Dans le cas général où le signal reçu Sy est un multiplex temporel correspondant à n signaux multiplexés, le coupleur K comprendra n sortie fournissant n signaux de prélèvement à respectivement n portes optiques par l'intermédiaire de lignes à retard. Chaque porte optique est commandée par le signal de sélection SEL. Ainsi, selon l'exemple discuté jusqu'à présent, le coupleur K comporte quatre sorties. Une des sorties est reliées directement à la porte G'4 et trois autres sorties sont reliées respectivement aux portes G'1, G'2, G'3 par l'intermédiaire respectivement des lignes à retard d1, d2, d3. Les portes optiques G'1-G'4 reçoivent des signaux de prélèvement retardés Sy1-Sy4 et fournissent respectivement les signaux démultiplexés compressés S'1-S'4.

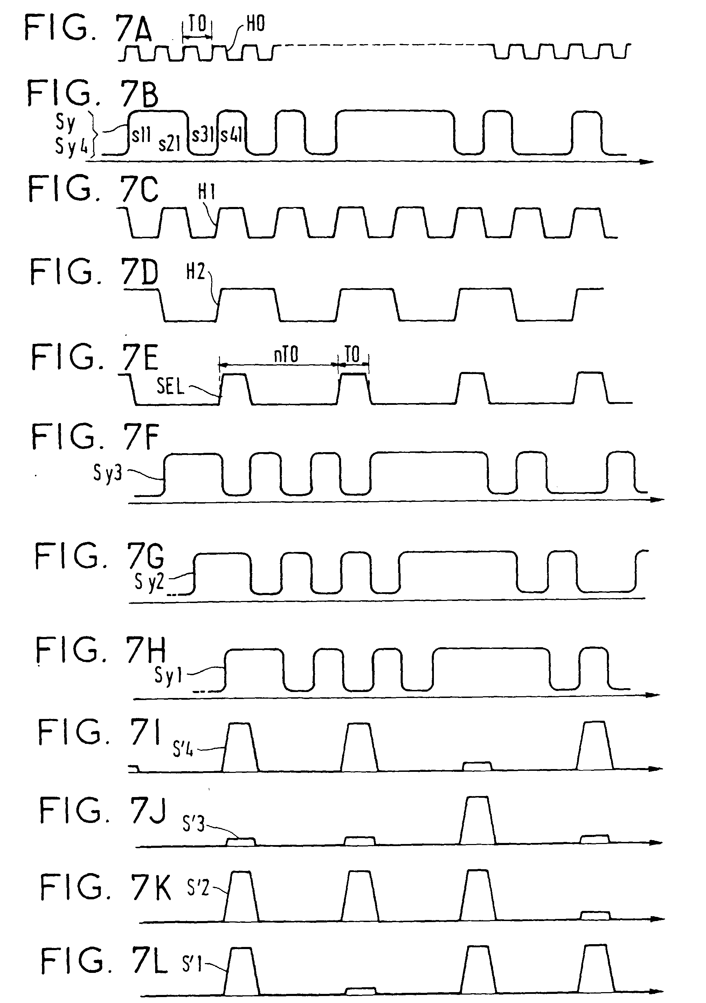

Les chronogrammes a) à l) de la figure 7 permettent d'expliquer le fonctionnement du dispositif de la figure 6. L'horloge de base H0 est représentée sur le chronogramme a). Le chronogramme b) représente le signal Sy reçu. A partir de ce signal, le dispositif de récupération de signal d'horloge 8 génère le signal d'horloge H1 représenté sur le chronogramme c) . Le diviseur de fréquence par deux 9 fournit le signal H2 représenté sur le chronogramme d) et la porte ET 10 fournit le signal de sélection SEL représenté sur le chronogramme e).

Les signaux de prélèvement correspondent au signal à retard nul Sy4 représenté sur le chronogramme b) tandis que les signaux de prélèvement effectivement retardés Sy3, Sy2, Sy1 sont représentés respectivement sur les chronogrammes f), g), h). Ces trois derniers signaux sont retardés par rapport au signal Sy4 de respectivement T0, 2T0, 3T0. Dans le cas où on traiterait un multiplex de n signaux, on créerait de la même façon des signaux de prélèvement retardés décalés entre eux de T0, 2T0, ..., (n-1) T0.

Le signal SEL étant appliqué sur les électrodes de commande des portes G'1-G'4, on obtient en sortie les signaux démultiplexés compressés S'4, S'3, S'2, S'1 représentés respectivement sur les chronogrammes i), j), k), l).

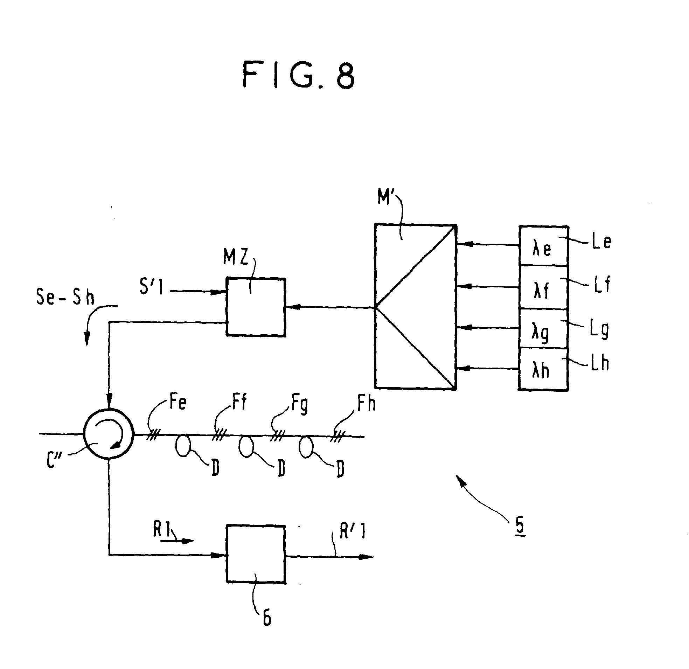

La figure 8 représente un exemple de réalisation d'un des dispositifs de décompression 5 selon l'invention du démultiplexeur temporel. Le dispositif comporte un modulateur MZ' recevant d'une part l'un des signaux demultiplexés compressés S'1 et d'autre part une combinaison d'ondes porteuses de longueurs d'onde différentes λe-λh fournie par des oscillateurs laser Le-Lh par l'intermédiaire d'un multiplexeur M'.

Dans le cas général où T est l'intervalle de temps bit et Δ est la durée des impulsions, et à condition que T soit au moins égal à 2Δ, le nombre d'oscillateurs peut prendre une valeur q comprise entre 2 et T/Δ.

Dans le cas particulier où le signal décompressé à fournir est de type NRZ, on prendra pour q le nombre entier le plus proche de T/Δ.

Ainsi, dans le contexte du multiplexage temporel décrit précédemment, on a Δ = T/n = T0 et un signal décompressé de type NRZ est obtenu pour q = n. L'exemple représenté correspond à ce cas pour n = 4.

Un circulateur C" comporte un premier port relié à la sortie du modulateur MZ', un second port relié à un dispositif à retard et un troisième port fournissant un signal décompressé R1. Le dispositif à retard peut être constitué de filtres réjecteurs Fe-Fh montés en cascade par l'intermédiaire de lignes à retard D. Les filtres Fe-Fh sont accordés respectivement pour réfléchir les longueurs d'ondes λe-λh. Pour tenir compte des trajets aller et retour des ondes, les lignes à retard D sont dimensionnées chacune pour créer un retard sensiblement égal à Δ/2 = T/2n = T0/2. Dans le cas général, le dispositif à retard comportera q filtres réjecteurs accordés respectivement pour réfléchir les q longueurs d'ondes différentes et couplés en cascade par l'intermédiaire de q-1 lignes à retard D dimensionnées chacune pour créer un retard sensiblement égal à Δ/2.

Le signal R1 est appliqué à un convertisseur optoélectronique 6, constitué par exemple d'une photodiode, pour fournir le signal électrique de sortie R'1.

Le modulateur MZ' peut être à structure interférométrique, par exemple du type Mach-Zehnder, analogue à celle décrite en référence à la figure 4. Cependant, pour assurer un taux d'extinction maximum, la structure doit être dimensionnée et/ou polarisée pour réaliser une interférence constructive lorsque le niveau de puissance du signal d'entrée S'1 est haut.

En fonctionnement, le modulateur MZ' fournit des signaux auxiliaires Se-Sh portés respectivement par les longueurs d'ondes λe-λh et reproduisant chacun la modulation du signal S'1, comme représenté sur le chronogramme 1) de la figure 7. Ces signaux auxiliaires Se-Sh sont réfléchis et retardés par le dispositif à retard puis réintroduit dans le circulateur C". Les signaux retardés correspondants Re-Rh présentent des retards tels que deux signaux auxiliaires retardés consécutifs quelconques soient décalés temporellement de sensiblement la durée Δ.

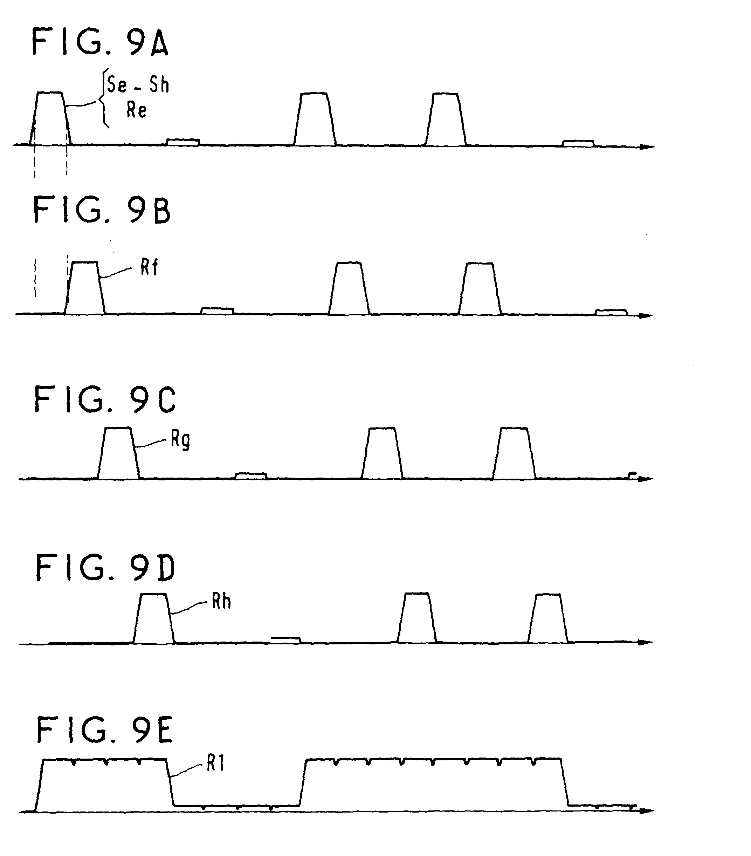

Les signaux retardés Re-Rh sont représentés respectivement sur les chronogrammes a) à d) de la figure 9. Le circulateur C" fournit alors la combinaison de ces signaux qui constitue le signal décompressé R1 représenté sur le chronogramme e).

Une variante de réalisation pourrait consister à remplacer le modulateur à structure interférométrique par un modulateur utilisant un milieu amplificateur optique semi-conducteur recevant par un premier port le signal S'1 et par un port opposé les q ondes porteuses optiques combinées. Cette solution entraîne toutefois une dégradation du taux d'extinction.

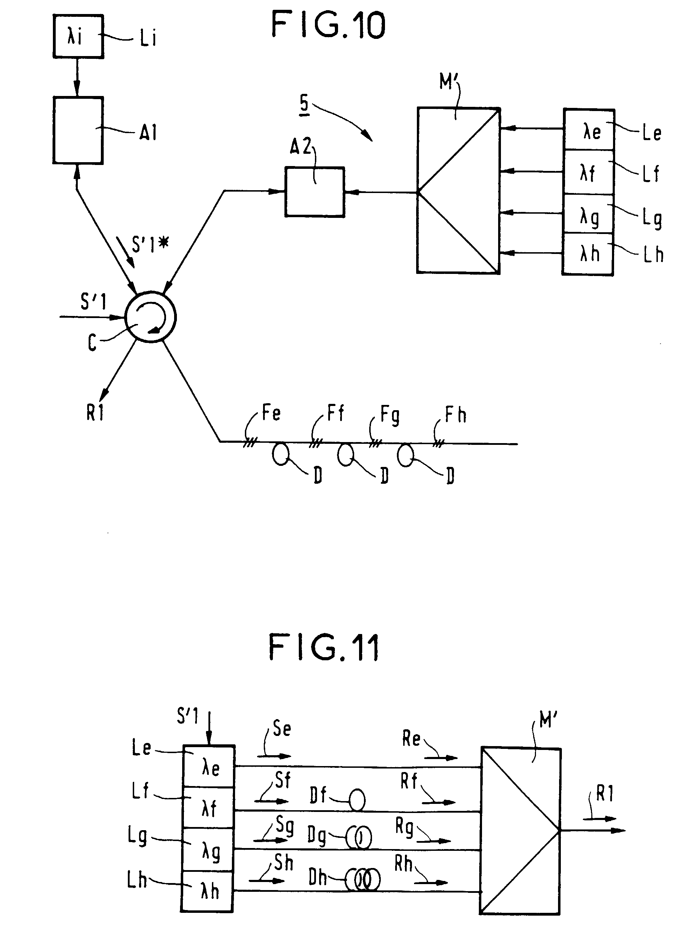

On pourra donc préférer la variante représentée à la figure 10. Par rapport à la réalisation de la figure 8, cette variante se distingue par un circulateur C à 5 ports. Un premier port reçoit le signal S'1, un second port est relié à un convertisseur de longueur d'onde A1, Li, un troisième port est relié à un premier port d'un amplificateur optique semi-conducteur A2 dont un port opposé reçoit les q ondes porteuses optiques combinées, un quatrième port est relié au dispositif à retard Fe-Fh, D, et un cinquième port fournit le signal décompressé R1. Le convertisseur de longueur d'onde est constitué d'un autre amplificateur semi-conducteur A1 relié à la source laser Li. Il a pour effet de fournir à l'amplificateur A2 un signal S'1*, complémentaire du signal reçu S'1 et porté par la longueur d'onde λi du laser Li.

Le fonctionnement est analogue à celui de réalisation de la figure 8.

L'autre variante représentée à la figure 11 illustre le cas où on applique les retards aux signaux auxiliaires Se-Sh avant de les combiner.

Les sources optiques Le-Lh sont dans ce cas constituées de lasers à mode bloqué commandés par le signal reçu S'1. Elles sont reliées à l'entrée du multiplexeur M' par l'intermédiaire de lignes à retard Df, Dg, Dh fournissant les retards voulus. Les sources Le-Lh fournissent directement les signaux auxiliaires Se-Sh et le multiplexeur M' qui reçoit les signaux auxiliaires retardés Re-Rh délivre signal décompressé R1.

L'invention n'est pas limitée aux modes de réalisations qui viennent d'être décrits. En particulier, le dispositif à retard des figure 8 et 10 constitué des filtres Fe-Fh montés en cascade par l'intermédiaire de lignes à retard D peut être remplacé par un dispositif équivalent constitué par exemple d'un coupleur relié en parallèle aux filtres par l'intermédiaire de lignes à retard différentes appropriées. Cette solution permet un ajustement plus facile des retards mais entraîne des pertes supplémentaires.

On peut enfin remarquer que l'invention permet d'effectuer une décompression aussi grande que l'on veut, bien que le nombre des ondes porteuses optiques soit en pratique limité. Il suffit en effet de placer en cascade plusieurs dispositifs de décompression de façon à réaliser l'élargissement des impulsions en plusieurs étapes compatibles chacune avec les limitations technologiques de chaque dispositif.

## Revendications

1. Procédé de décompression d'impulsions constituant un signal optique binaire reçu (S'1), lesdites impulsions étant contenues dans des intervalles de temps bit successifs de durée T et ayant une durée Δ au plus égal à T/q, q étant un nombre entier au moins égal à 2, caractérisé en ce qu'il consiste notamment :
- à former q signaux auxiliaires (Se-Sh) obtenus respectivement en modulant en fonction de l'amplitude dudit signal reçu (S'1) les amplitudes de q ondes porteuses optiques de longueurs d'onde différentes (λe-λh), et
- à former un signal décompressé (R1) constitué d'une combinaison de q signaux auxiliaires retardés (Re-Rh) obtenus en appliquant auxdits signaux auxiliaires (Se-Sh) des retards tels que deux signaux auxiliaires retardés (Re-Rh) consécutifs quelconques soient décalés temporellement de sensiblement ladite durée Δ.

2. Procédé selon la revendication 1, caractérisé en ce qu'on combine lesdits signaux auxiliaires (Se-Sh) avant de leur appliquer lesdits retards, en exploitant les différences de leurs longueurs d'onde.

3. Procédé selon la revendication 1, caractérisé en ce qu'on applique lesdits retards auxdits signaux auxiliaires (Se-Sh) avant de les combiner.

4. Procédé selon l'une des revendications 1 à 3, caractérisé en ce que q est un nombre entier voisin de T/Δ.

5. Dispositif pour décompresser des impulsions constituant un signal optique binaire reçu (S'1), lesdites impulsions étant contenues dans des intervalles de temps bit successifs de durée T et ayant une durée Δ au plus égal à T/q, q étant un nombre entier au moins égal à 2, caractérisé en ce qu'il comporte :
- des premiers moyens (MZ', M') pour moduler en fonction de l'amplitude dudit signal reçu (S'1) les amplitudes de q ondes porteuses optiques de longueurs d'onde différentes (λe-λh), et
- des seconds moyens (C", Fe-Fh, D) pour former un signal décompressé (R1) constitué d'une combinaison de q signaux auxiliaires retardés (Re-Rh) obtenus en appliquant auxdits signaux auxiliaires (Se-Sh) des retards tels que deux signaux auxiliaires retardés (Re-Rh) consécutifs quelconques soient décalés temporellement de sensiblement ladite durée Δ.

6. Dispositif selon la revendication 5, caractérisé en ce que lesdits premiers moyens comportent des troisièmes moyens (M') pour combiner lesdites q ondes porteuses optiques (λe-λh), et des quatrièmes moyens (MZ') pour moduler en fonction de l'amplitude dudit signal reçu (S'1) les amplitudes desdites q ondes porteuses optiques (λe-λh) combinées

7. Dispositif selon la revendication 6, caractérisé en ce que lesdits quatrièmes moyens sont constitués d'un modulateur à structure interférométrique (M') recevant par un premier port ledit signal reçu (S'1) et par un port opposé lesdites q ondes porteuses optiques (λe-λh) combinées.

8. Dispositif selon la revendication 6, caractérisé en ce que lesdits quatrièmes moyens comportent un milieu amplificateur optique semi-conducteur (A2) recevant par un premier port un signal complémentaire (S'1*) dudit signal reçu (S'1) et par un port opposé lesdites q ondes porteuses optiques (λe-λh) combinées.

9. Dispositif selon l'une des revendications 5 à 8, caractérisé en ce que lesdits seconds moyens comportent :
- un dispositif à retard formé de q filtres réjecteurs (Fe-Fh) accordés respectivement pour réfléchir lesdites longueurs d'ondes différentes (λe-λh) et couplés en cascade par l'intermédiaire de q-1 lignes à retard (D) dimensionnées chacune pour créer un retard sensiblement égal à Δ/2, et
- des moyens de couplage (C") disposés pour relier la sortie desdits premiers moyens (MZ', M') audit dispositif à retard (Fe-Fh, D) et pour en extraire les ondes qu'il réfléchit.

10. Système de communication comportant un réseau optique (Z), au moins un terminal d'émission (TX) muni d'un dispositif de multiplexage temporel (1) et au moins un terminal de réception (RX) muni d'un dispositif de démultiplexage temporel (4, 5), caractérisé en ce que ledit dispositif de démultiplexage temporel comprend un dispositif de décompression selon l'une des revendications 5 à 9.
